# EUROPÄISCHE PATENTSCHRIFT

(11) **EP 2 585 206 B1**
(45) Veröffentlichungstag und Bekanntmachung des Hinweises auf die Patenterteilung: **26.10.2016**
(21) Anmeldenummer: 11727689.9
(22) Anmeldetag: 21.06.2011
(51) Int. Cl.: B01F 17/46, C11D 1/44

(54) **ALKOXYLATE UND DEREN VERWENDUNG**
ALKOXYLATES AND THE USE THEREOF
ALCOXYLATES ET LEUR UTILISATION

(30) Priorität: 28.06.2010 EP 10167459
(43) Veröffentlichungstag der Anmeldung: 01.05.2013
(73) Patentinhaber: BASF SE, 67056 Ludwigshafen am Rhein (DE)
(72) Erfinder: KLINGELHOEFER, Paul, 68165 Mannheim (DE); TROPSCH, Jürgen, 67354 Römerberg (DE); KAHL, Rolf-Dieter, 67454 Haßloch (DE); SENF, Andreas, 67310 Hettenleidelheim (DE)
(74) Vertreter: BASF IP Association
(86) Internationale Anmeldenummer: PCT/EP2011/060360
(87) Internationale Veröffentlichungsnummer: WO 2012/000845

(56) Entgegenhaltungen:
- WO-A1-00/07709
- WO-A1-2009/004044
- WO-A2-2011/086115
- DE-A1- 2 643 795
- US-A- 3 931 043

## Beschreibung

Die vorliegende Erfindung betrifft die Verwendung eines Alkoxylates basierend auf 2-Propyl-heptyl-amin, welches mit Ethylenoxid, Propylenoxid, Butylenoxid, Pentylenoxid, Styroloxid, Cyclohexylenoxid und/oder Decylenoxid alkoxyliert worden ist, bzw. dessen quarternisiertes Derivat in Reinigungsmitteln, als Emulgator, bei der Herstellung von Fasern, zur Lederbehandlung, in Drucktinten, in Formulierungen für die Bauchemie oder in Formulierungen für die Flotation. Des Weiteren betrifft die vorliegende Erfindung eine Mischung enthaltend mindestens eines der genannten Alkoxylate sowie mindestens eine oberflächenaktive Substanz und deren Verwendung.

Zusammensetzungen basierend auf alkoxylierten Alkylaminen sind aus dem Stand der Technik bereits bekannt.

WO 2009/004044 A1 offenbart asymmetrisch alkoxylierte Alkylamine, welche als Tenside eingesetzt werden können. Die asymmetrisch alkoxylierten Alkylamine basieren auf entsprechenden Alkylaminen mit ein bis vier Kohlenstoffatomen, bzw. Benzylaminen. Es werden 1 bis 30 Einheiten Ethylenoxid, Propylenoxid und/oder Butylenoxid durch Alkoxylierung addiert. WO 2009/004044 A1 offenbart des Weiteren, dass diese Verbindungen in herbizid wirkenden Zusammensetzungen eingesetzt werden können.

US 5,668,085 offenbart oberflächenaktive Verbindungen, umfassend alkoxylierte Amine. Diese Alkoxylate basieren auf Alkyl- oder Alkenyl-Aminen mit 8 bis 22 Kohlenstoffatomen und werden durch Alkoxylierung dieser Amine mit Ethylenoxid oder Propylenoxid erhalten. Insgesamt liegen 2 bis 8 Einheiten der genannten Alkylenoxide in den Verbindungen gemäß US 5,668,085 vor. Weitere alkoxylierte Amine sind aus WO 00/07709, DE 2643795 und US 3931043 bekannt.

Aufgabe der vorliegenden Erfindung war es daher, ein Alkoxylat bereitzustellen, welches in verschiedenen technischen Anwendungen eingesetzt werden kann und dabei vorteilhafte Ergebnisse liefert. Des Weiteren ist es eine Aufgabe der vorliegenden Erfindung, dass entsprechende Alkoxylate eingesetzt werden, welche weniger toxisch, vor allem weniger aquatoxisch, sind.

Diese Aufgaben werden erfindungsgemäß gelöst durch die Verwendung eines Alkoxylates der allgemeinen Formel (A) 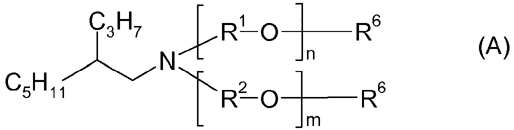 oder eines quaternisierten Alkoxylates der allgemeinen Formel (AQ) 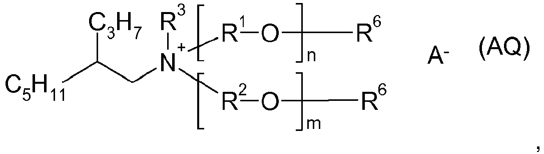 wobei
- R¹, R²: unabhängig voneinander ausgewählt sind aus der Gruppe bestehend aus Ethylen, Propylen, Butylen, Pentylen, Phenyl-ethylen, Decylen und Mischungen davon,
- R³: H, -OH, -OR⁴, -[R⁵-O]ₚ-R⁶, C₁-C₆-Alkyl oder ein Sauerstoffanion bedeutet,
- R⁴: C₁-C₆-Alkyl, C₂-C₆-Alkenyl oder C₂-C₆-Alkinyl bedeutet,
- R⁵: unabhängig voneinander ausgewählt ist aus der Gruppe bestehend aus Ethylen, Propylen, Butylen und Mischungen davon,
- R⁶: unabhängig voneinander-H, C₁-C₆-Alkyl, C₂-C₆-Alkenyl, C₂-C₆-Alkinyl, -SO₃R^{a}, -P(O)OR^{b}OR^{c}, -CH₂CO₂R^{d} oder -C(O)R^{e} bedeutet,
- R^{a}, R^{d}: unabhängig voneinander H, organisches oder anorganisches Kation bedeuten,
- R^{b}, R^{c}: unabhängig voneinander H, organisches oder anorganisches Kation, C₁-C₆-Alkyl, C₂-C₆-Alkenyl oder C₂-C₆-Alkinyl bedeuten,
- R^{e}: C₁-C₂₂-Alkyl, C₂-C₂₂-Alkenyl, C₂-C₂₂-Alkinyl, C₅-C₂₂-Aryl, C₆-C₂₂-Alkylaryl bedeuten,
- m, n, p: unabhängig voneinander ganze Zahl von 1 bis 30 bedeuten und
- A⁻: ein Anion ist, wobei für den Fall, dass R³ ein Sauerstoffatom ist, A nicht vorhanden ist,
in Reinigungsmitteln, als Entroster, als Emulgator, bei der Herstellung von Fasern, zur Lederbehandlung, in Drucktinten, in Formulierungen für die Bauchemie oder in Formulierungen für die Flotation.

Die Aufgaben werden des Weiteren erfindungsgemäß gelöst durch eine Pestizid-freie Mischung enthaltend mindestens die Komponenten:
(A) mindestens ein erfindungsgemäßes Alkoxylat der allgemeinen Formel (A) und/oder (AQ) als Komponente (A), und
(B) mindestens eine oberflächenaktive Substanz als Komponente (B) und/oder
(C) mindestens eine organische Carbonsäure als Komponente (C).

Die erfindungsgemäß eingesetzten Verbindungen der allgemeinen Formeln (A) und (AQ) werden im Folgenden detailliert beschrieben.

Bevorzugt hat n einen Wert von 1 bis 20, besonders bevorzugt von 1 bis 15. Bevorzugt hat m einen Wert von 1 bis 20, besonders bevorzugt von 1 bis 15. Bevorzugt hat p einen Wert von 1 bis 30, besonders bevorzugt von 1 bis 20. Die Werte von n, m und p sind normalerweise durchschnittliche Werte, wie sie meist bei der Alkoxylierung mit Alkoxiden entstehen. Daher können n, m und p sowohl ganzzahlige Werte, als auch alle Werte zwischen den ganzen Zahlen einnehmen.

Bevorzugt ist im Aminalkoxylat (A) die Summe aus n und m 2 bis 40. In einer weiteren bevorzugten Ausführungsform ist in dem quarternisierten Aminalkoxylat der allgemeinen Formel (AQ) die Summe aus n, m und p 3 bis 80.

In dem Aminalkoxylat (A) ist die Summe aus n und m besonders bevorzugt 3 bis 30, ganz besonders bevorzugt 5 bis 25. In einer weiteren, speziell bevorzugten Ausführungsform ist die Summe aus n und m 6 bis 9, ganz besonders bevorzugt 6,5 bis 8,5 und insbesondere 6,9 bis 7,9. In einer weiteren, speziell bevorzugten Ausführungsform ist die Summe aus n und m 11 bis 40, insbesondere 12 bis 30 und insbesondere 13, 5 bis 25.

Bei dem Alkoxylat der allgemeinen Formel (AQ) ist die Summe aus n, m und p besonders bevorzugt 3 bis 40 und speziell 5 bis 25.

R¹, R² und R⁵ sind im Allgemeinen unabhängig voneinander Ethylen, Propylen, Butylen, Pentylen, Phenyl-ethylen, Decylen und Mischungen davon. Diese Bedeutungen für R¹, R² und R⁵ in den allgemeinen Formeln (A) bzw. (AQ) rühren daher, dass 2-Propyl-heptyl-amin mit Ethylenoxid, Propylenoxid, Butylenoxid, Pentylenoxid, Styroloxid, Decylenoxid oder Mischungen davon umgesetzt worden ist.

R\ R² und R⁵ sind bevorzugt unabhängig voneinander Ethylen, Ethylen und Propylen, Ethylen und Butylen oder Ethylen, Propylen und Butylen. In einer besonders bevorzugten Ausführungsform sind R¹, R² und R⁵ Propylen. In einer weiteren bevorzugten Ausführungsform sind R¹, R² und R⁵ Butylen. Besonders bevorzugt sind R¹, R² und R⁵ unabhängig voneinander Ethylen oder Ethylen und Propylen. Ganz besonders bevorzugt sind R¹, R² und R⁵ Ethylen.

Wenn R¹, R² oder R⁵ einen Butylenrest umfassen, kann dieser als n-Butylen-, iso-Butylen- und/oder 2,3-Butylen-Gruppe vorliegen, wobei n-Butylen und iso-Butylen bevorzugt sind und n-Butylen am meisten bevorzugt ist.

R¹, R² und R⁵ können unabhängig voneinander eine Mischung aus Ethylen, Propylen oder Butylen sein. Dabei kann z. B. einer oder alle Reste R¹, R² und R⁵ jeweils in einer Alkoxylat-Kette eine Mischung dieser Gruppen enthalten. Solche Mischungen können in beliebiger Reihenfolge miteinander verbunden sein, beispielsweise statistisch oder in Blockweise, wie ein Block Ethylen und ein Block Propylen. Es können auch jeweils eine oder mehrere Reste R¹, R² und R⁵ eine komplette Alkoxylat-Kette aus verschiedenen Alkylen-Gruppen bilden. Beispielsweise kann R¹ und R² aus Ethylen und R⁵ aus Propylen aufgebaut sein.

R³ ist bevorzugt H, C₁-C₄-Alkyl oder ein Sauerstoffanion, besonders bevorzugt ist es H, Methyl, Butyl oder ein Sauerstoffanion. In einer speziell bevorzugten Ausführungsform ist R³ Methyl. In einer weiteren, speziell bevorzugten Ausführungsform ist R³ ein Sauerstoffanion. In einer weiteren, speziell bevorzugten Ausführungsform ist R³ H.

R⁴ ist bevorzugt ein C₁-C₆-Alkyl, insbesondere Methyl oder Butyl wie n-Butyl, iso-Butyl und/oder tert.-Butyl, speziell Methyl.

R⁶ ist bevorzugt H oder C₁-C₆-Alkyl, besonders bevorzugt H oder Methyl, insbesondere H.

R^{a} und R^{d} sind unabhängig voneinander H⁺, oder anorganische oder organische Kationen, welche einfach oder mehrfach positiv geladen sein können. Beispiele für anorganische Kationen sind Kationen von Na⁺, K⁺, Mg²⁺, Ca²⁺ oder Zⁿ²+. Beispiele für organische Kationen sind Ammonium, Methylammonium, Dimethylammonium, Trimethylammonium, Tetramethylammonium, (2-Hydroxyethyl)-Ammonium, Bis(2-hydroxyethyl)ammonium, Tris(2-hydroxyethyl)ammonium, Tetra(2-hydroxyethyl)ammonium. Bevorzugt sind R^{a} und R^{d} unabhängig voneinander H⁺, oder anorganische Kationen, besonders bevorzugt wie oben genannt. Die oben unter R⁶ genannten Reste, die R^{a} und R^{d} enthalten, sind insgesamt bevorzugt ungeladen.

R^{b} und R^{c} sind bevorzugt unabhängig voneinander H⁺, anorganische oder organische Kationen. Geeignete anorganische oder organische Kationen sind die unter R^{a} bzw. R^{d} Genannten.

R^{e} ist bevorzugt C₁-C₁₂-Alkyl, C₅-C₁₂-Aryl oder C₆-C₁₂-Alkylaryl, besonders bevorzugt C₁ -C₆-Alkyl, beispielsweise Methyl, Ethyl, Propyl wie n-Propyl, iso-Propyl, Butyl wie n-Butyl, iso-Butyl, tert.-Butyl, Pentyl wie n-Pentyl, iso-Pentyl, tert.-Pentyl oder Hexyl wie n-Hexyl, iso-Hexyl, tert.-Hexyl.

A⁻ ist ein Anion, wie sie dem Fachmann an sich allgemein bekannt sind. Bevorzugt ist A- ein Halogenid wie Chlorid oder Bromid, Phosphat, Sulfat, Carboxylat, bevorzugt abgleitet von Carbonsäuren mit 6 bis 20 C-Atomen, oder eine Mischung davon. Insgesamt ist die Verbindung der allgemeinen Formel (AQ) in diesem Fall ungeladen.

Falls R³ ein Sauerstoffanion ist, liegt ein Aminoxid vor. In diesem Fall ist ein weiteres Anion A⁻ nicht vorhanden, und die Verbindung der allgemeinen Formel (AQ) ist insgesamt ungeladen.

Bei dem Alkoxylat gemäß der allgemeinen Formel (A) sind R¹ und R² bevorzugt unabhängig voneinander Ethylen, Ethylen und Propylen, Ethylen und Butylen oder Ethylen, Propylen und Butylen und die Summe aus n und m ist 2 bis 60, bevorzugt 2 bis 40, besonders bevorzugt 3 bis 30 und insbesondere 5 bis 25.

In einer weiteren bevorzugten Ausführungsform sind in dem Alkoxylat gemäß der allgemeinen Formel (A) R¹ und R² Ethylen, Ethylen und Propylen, Ethylen und Butylen oder Ethylen, Propylen und Butylen und die Summe aus n und m ist 6 bis 9, insbesondere 6,5 bis 8,5 und insbesondere 6,9 bis 7,9.

In einer weiteren bevorzugten Ausführungsform sind in dem Alkoxylat gemäß der allgemeinen Formel (A) R¹ und R² Ethylen, Ethylen und Propylen, Ethylen und Butylen oder Ethylen, Propylen und Butylen und die Summe aus n und m 11 bis 40, insbesondere 12 bis 30 und insbesondere 13,5 bis 25.

Beim Aminalkoxylat der allgemeinen Formel (A) sind R¹ und R² besonders bevorzugt Ethylen und die Summe aus n und m ist 2 bis 60, bevorzugt 2 bis 40, besonders 3 bis 30 und insbesondere 5 bis 25. In einer weiteren besonders bevorzugten Ausführungsform ist R¹ und R² Ethylen und die Summe aus n und m 6 bis 9, insbesondere 6,5 bis 8,5 und insbesondere 6,9 bis 7,9. In einer weiteren bevorzugten Ausführungsform ist R¹ und R² Ethylen und die Summe aus n und m 11 bis 40, insbesondere 12 bis 30 und insbesondere 13,5 bis 25.

Die Verbindungen der allgemeinen Formeln (A) und (AQ) können als Gemische von Stereoisomeren oder als isolierte Stereoisomere vorliegen. Tautomere und Betaine sind erfindungsgemäß von den Strukturen (A) und (AQ) ebenfalls umfasst.

In den Verbindungen der allgemeinen Formeln (A) und (AQ) kann der Rest C₅H₁₁ entweder linear oder verzweigt sein. Beispiele für verzweigte C₅H₁₁-Reste sind beispielsweise 1-Methyl-butyl, 2-Methyl-butyl, 3-Methyl-butyl, 1,2-Dimethylpropyl, 2,3-Dimethylpropyl, 1,1-Dimethylpropyl oder 2,2-Dimethylpropyl.

Des Weiteren kann in den Verbindungen der allgemeinen Formeln (A) und (AQ) der Rest C₃H₇ entweder linear oder verzweigt sein. Ein verzweigter C₃H₇-Rest ist beispielsweise 1-Methylethyl.

Ein Verfahren zur Herstellung der Verbindungen der allgemeinen Formel (Q) oder (AQ) umfasst beispielsweise die Alkoxylierung von 2-Propylheptylamin mit Ethylenoxid, Propylenoxid, Butylenoxid oder eine Mischung davon. Die Herstellung von 2-Propylheptylamin ist allgemein bekannt, beispielsweise durch Umsetzung von Ammoniak mit 2-Propylheptanol wie in US 5,808,158 beschrieben. Die Alkoxylierung kann durch starke Basen, wie Alkalihydroxide und Erdalkalihydroxide, Brönstedsäuren oder Lewissäuren, wie AICl₃, BF₃ katalysiert werden. Für eng verteilte Alkoholalkoxylate können Katalysatoren wie Hydrotalcit oder DMC verwendet werden. Die Alkoxylierung erfolgt vorzugsweise bei Temperaturen im Bereich von etwa 80 bis 250°C, bevorzugt etwa 100 bis 220 °C. Der Druck liegt vorzugsweise zwischen Umgebungsdruck und 600 bar. Gewünschtenfalls kann das Alkylenoxid eine Inertgasbeimischung, z. B. von etwa 5 bis 60%, enthalten.

Das quaternisierte Derivats (AQ) des Aminalkoxylates (A) kann in einem weiteren Reaktionsschritt aus dem Aminalkoxylat (A) durch Quaternisierung hergestellt werden. Zur Einführung des Restes R³ in das Aminalkoxylat (A) kann es beispielsweise mit einem Alkylierungsreagenz wie Methylchlorid, Dimethylsulfat, oder Butylchlorid umgesetzt werden. Zur Einführung des eines Sauerstoffanions in das Aminalkoxylat (A) kann es oxidiert werden, beispielsweise durch Umsetzung der Aminogruppe mit Wasserstoffperoxid, Persäuren wie meta-Chlorperbenzoesäure oder Peressigsäure oder Peroxomonoschwefelsäure. Die Herstellung der quater nisierten Derivate (AQ) mit R³ = H kann durch einfache Protonierung von Ausgangsverbindungen der Struktur (A) erfolgen. Die Herstellung der quaternisierten Derivate (AQ) mit R³ = OH kann durch einfache Protonierung von Ausgangsverbindungen (AQ) mit R³ = Sauerstoffanion erfolgen. Zur Protonierung sind als Säuren organische Säuren, z. B. C₁ bis C₂₀ Carbonsäuren, beispielsweise die als Komponente (C) der erfindungsgemäßen Mischung genannten Carbonsäuren oder anorganische Säuren, z. B. Salzsäure, Phosphorsäure oder Schwefelsäure geeignet. Die Protonierung kann in einem separaten Syntheseschritt durchgeführt werden, so dass das quaternisierte Derivat (AQ) isoliert werden kann. Es ist auch möglich die Protonierung durch Mischen der Ausgangsverbindungen mit einer oder mehreren Säuren in der erfindungsgemäßen Mischung durchzuführen.

Die vorliegende Erfindung betrifft die Verwendung der oben genannten Alkoxylate der allgemeinen Formel (A) und/oder der allgemeinen Formel (AQ) in Reinigungsmitteln, als Entroster, als Emulgator, bei der Herstellung von Fasern, zur Lederbehandlung, in Drucktinten, in Formulierungen für die Bauchemie oder in Formulierungen für Flotationen.

Beispiele für erfindungsgemäße Reinigungsmittel sind beispielsweise Reinigungsmittel für harte Oberflächen, beispielsweise Glas, Metall, Plastik, lackierte Metall- oder Kunststoffoberflächen wie Oberflächen von PKW oder LKW, als Allzweckreiniger oder zur Metallreinigung. In diesen Reinigungsmittel liegen die Verbindungen der allgemeinen Formel (A) oder (AQ) in einer Menge von beispielsweise 0,1 bis 20 Gew.-%, bevorzugt 0,5 bis 10 Gew.-%, besonders bevorzugt 0,5 bis 5 Gew.-%, jeweils bezogen auf die gesamte Formulierung, vor.

Beispielhafte Formulierungen, in denen die genannten Verbindungen der allgemeinen Formel (A) und/oder (AQ) als Entroster eingesetzt werden können, sind beispielsweise Formulierungen zur Entrostung von Metalloberflächen, insbesondere Eisenoberflächen. In diesen Formulierungen zur Entrostung liegen die Verbindungen der allgemeinen Formel (A) oder (AQ) in einer Menge von beispielsweise 0,1 bis 20 Gew.-%, bevorzugt 0,5 bis 10 Gew.-%, besonders bevorzugt 0,5 bis 5 Gew.-%, jeweils bezogen auf die gesamte Formulierung, vor.

Beispielhafte Formulierungen, in denen die genannten Verbindungen der allgemeinen Formel (A) und/oder (AQ) als Emulgator eingesetzt werden können, sind beispielsweise Kühlschmierstoffe, Wachse, Bitumenemulsionen, Siliconemulsionen, insbesondere für textile Anwendungen, beispielsweise zur Griffverbesserung (softening/finishing). Als Emulgator werden die Verbindungen der allgemeinen Formel (A) oder (AQ) in einer Menge von beispielsweise 0,1 bis 20 Gew.-%, bevorzugt 0,5 bis 10 Gew.-%, besonders bevorzugt 0,5 bis 5 Gew.%, jeweils bezogen auf die gesamte Formulierung, vor.

Bei der Herstellung von Fasern werden die oben genannten Verbindungen beispielsweise als Antistatica eingesetzt. In Formulierungen, die bei der Herstellung von Fasern eingesetzt werden, liegen die Verbindungen der allgemeinen Formel (A) oder (AQ) in einer Menge von beispielsweise 0,1 bis 20 Gew.-%, bevorzugt 0,5 bis 10 Gew.%, besonders bevorzugt 0,5 bis 5 Gew.%, jeweils bezogen auf die gesamte Formulierung, vor.

Bei der Lederbehandlung werden die oben genannten Verbindungen beispielsweise zur Entfettung eingesetzt. In Formulierungen zur Lederbehandlung liegen die Verbindungen der allgemeinen Formel (A) oder (AQ) in einer Menge von beispielsweise 0,1 bis 20 Gew.%, bevorzugt 0,5 bis 10 Gew.-%, besonders bevorzugt 0,5 bis 5 Gew.-%, jeweils bezogen auf die gesamte Formulierung, vor.

In Drucktinten werden die oben genannten Verbindungen beispielsweise in wasserbasierten Ink-jet-Drucktinten eingesetzt. In Drucktinten liegen die Verbindungen der allgemeinen Formel (A) oder (AQ) in einer Menge von beispielsweise 0,1 bis 20 Gew.%, bevorzugt 0,5 bis 10 Gew.-%, besonders bevorzugt 0,5 bis 5 Gew.-%, jeweils bezogen auf die gesamte Formulierung, vor.

In Formulierungen für die Bauchemie werden die oben genannten Verbindungen beispielsweise in Bitumenemulsionen eingesetzt. In diesen in der Bauchemie eingesetzten Formulierungen liegen die Verbindungen der allgemeinen Formel (A) oder (AQ) in einer Menge von beispielsweise 0,1 bis 20 Gew.%, bevorzugt 0,5 bis 10 Gew.%, besonders bevorzugt 0,5 bis 5 Gew.-%, jeweils bezogen auf die gesamte Formulierung, vor.

In Formulierungen für Flotationen werden die oben genannten Verbindungen beispielsweise zur Entfernung von Druckfarben (Deinking) eingesetzt. Verfahren bzw. Formulierungen zur Flotation sind dem Fachmann an und für sich bekannt. In diesen Formulierungen für die Flotation liegen die Verbindungen der allgemeinen Formel (A) oder (AQ) in einer Menge von beispielsweise 0,1 bis 20 Gew.-%, bevorzugt 0,5 bis 10 Gew.%, besonders bevorzugt 0,5 bis 5 Gew.-%, jeweils bezogen auf die gesamte Formulierung, vor.

Die vorliegende Erfindung betrifft auch eine Mischung enthaltend mindestens die Komponenten:
(A) mindestens ein Alkoxylat der allgemeinen Formel (A) und/oder (AQ) wie oben definiert als Komponente (A)
   und
(B) mindestens eine oberflächenaktive Substanz als Komponente (B)
   und/oder
(C) mindestens eine organische Carbonsäure als Komponente (C).

### Komponente (A):

Bezüglich der Komponente (A), insbesondere bezüglich der bevorzugten Ausführungsformen, gilt das oben bezüglich der Alkoxylate der allgemeinen Formel (A) und/oder (AQ) Gesagte.

In der erfindungsgemäßen Mischung liegt die Komponente (A) im Allgemeinen in einer Menge von 0,1 bis 20 Gew.-%, bevorzugt 0,5 bis 15 Gew.-%, besonders bevorzugt 0,8 bis 12 Gew.-%, jeweils bezogen auf die gesamte Mischung vor.

Wird die erfindungsgemäße Mischung beispielsweise für die Reinigung von Metall eingesetzt, liegt die Komponente (A) im Allgemeinen in einer Menge von 0,5 bis 5 Gew.-%, bevorzugt 0,8 bis 2 Gew.-%, jeweils bezogen auf die gesamte Mischung vor.

Wird die erfindungsgemäße Mischung beispielsweise bei der Herstellung von Fasern eingesetzt, liegt die Komponente (A) im Allgemeinen in einer Menge von 0,1 bis 20 Gew.-%, bevorzugt 0,5 bis 5 Gew.-%, jeweils bezogen auf die gesamte Mischung vor.

### Komponente (B):

Als Komponente (B) liegt in der erfindungsgemäßen Mischung mindestens eine oberflächenaktive Substanz vor.

Im Allgemeinen können alle dem Fachmann bekannten, oberflächenaktiven Substanzen als Komponente (B) in erfindungsgemäßen Mischungen eingesetzt werden.

In einer bevorzugten Ausführungsform liegt als Komponente (B) mindestens ein anionisches Tensid, mindestens ein kationisches Tensid, mindestens ein nicht-ionisches Tensid und/oder mindestens ein amphoteres Tensid vor.

Beispiele für erfindungsgemäß geeignete anionische Tenside sind Alkoholsulfat/-ethersulfate, Alkoholphosphate und Etherphosphate, Alkylbenzolsulfonate, alpha-Olefinsulfonate, Sulfosuccinate etc.

Beispiele für erfindungsgemäß geeignete kationische Tenside sind quarternierte Ammoniumsalze wie N-Alkyltrimethylammoniumchlorid oder N.N-Dialkydimethylammoniumchlorid, Aminoxide wie N-Alkyldimethylaminoxid etc.

Beispiele für erfindungsgemäß geeignete nicht-ionische Tenside sind Alkoholalkoxylate, Alkylamidethoxylate, Alkylpolyglucoside, PO-EO-Blockcopolymere, Fettsäureethoxilate, Pflanzenölethoxilate etc.

Beispiele für erfindungsgemäß geeignete amphotere Tenside sind Alkylaminoxide, Betaine etc.

Verfahren zur Herstellung der genannten oberflächenaktiven Substanzen sind dem Fachmann bekannt. Des Weiteren sind die genannten oberflächenaktiven Substanzen kommerziell erhältlich.

Erfindungsgemäß besonders geeignete oberflächenaktive Substanzen sind ausgewählt aus der Gruppe bestehend aus Natriumsalzen der C₁₀-C₁₃-Alkylderivate von Benzolsulfonsäure, Oleylaminethoxylat mit 12 EO, Lauryl/Mistryl-Trimethylammonium Metosulfat und Mischungen davon.

In der erfindungsgemäßen Mischung liegt die Komponente (B) im Allgemeinen in einer Menge von 0,1 bis 50 Gew.-%, bevorzugt 1,0 bis 40 Gew.-%, besonders bevorzugt 1,0 bis 30 Gew.-%, jeweils bezogen auf die gesamte Mischung vor.

Wird die erfindungsgemäße Mischung beispielsweise für die Reinigung von Metall eingesetzt, liegt die Komponente (B) im Allgemeinen in einer Menge von 1,0 bis 25 Gew.-%, bevorzugt 1,5 bis 20 Gew.-%, jeweils bezogen auf die gesamte Mischung vor.

### Komponente (C):

Als Komponente (C) liegt in der erfindungsgemäßen Mischung gegebenenfalls mindestens eine organische Carbonsäure vor.

In der erfindungsgemäßen Mischung sind bevorzugt die Komponenten (A) und (B), (B) und (C) oder die Komponenten (A), (B) und (C) vorhanden.

Erfindungsgemäß können als Komponente (C) alle dem Fachmann bekannten Carbonsäuren eingesetzt werden. Bevorzugt sind diese ausgewählt aus der Gruppe bestehend aus Fettsäuren mit beispielsweise 12 bis 18 C-Atomen, Monocarbonsäuren und 1 bis 10 C-Atomen, Dicarbonsäuren mit 2 bis 16 C-Atomen und Mischungen davon.

Fettsäuren mit 12 bis 18 C-Atomen sind dem Fachmann an sich bekannt. Beispiele sind gesättigte oder ungesättigte Fettsäuren mit 12 bis 18 C-Atomen.

Beispiele für gesättigte Fettsäuren mit 12 bis 18 C-Atomen sind Laurinsäure (C₁₁H₂₃COOH), Myristinsäure (C₁₃H₂₇COOH), C₁₄H₂₀COOH, Palmitinsäure (C₁₅H₃₁COOH), Margarinsäure (C₁₆H₃₃COOH), Stearinsäure (C₁₇H₃₅COOH).

Beispiele für ungesättigte Fettsäuren mit 12 bis 18 C-Atomen sind Myristoleinsäure (C₁₃H₂₅COOH), Palmitoleinsäure (C₁₅H₂₉COOH), Petroselinsäure (C₁₇H₃₃COOH), Ölsäure (C₁₇H₃₃COOH), Elaidinsäure (C₁₇H₃₃COOH), Vaccensäure (C₁₇H₃₃COOH). Die genannten ungesättigten Fettsäuren mit gleicher C-Anzahl unterscheiden sich durch die Stellung der Doppelbindung.

Besonders bevorzugt liegen in der erfindungsgemäßen Mischung als Komponente (C) Fettsäuren vor, wenn diese zur Herstellung von Fasern verwendet wird.

Monocarbonsäuren mit 1 bis 10 C-Atomen sind dem Fachmann ebenfalls bekannt. Beispiele sind Ameisensäure, Essigsäure, Propionsäure, Buttersäure, Pentansäure, Hexansäure, Heptansäure, Octansäure, insbesondere 2-Ethyl-Hexyl-Carbonsäure, Nonansäure oder Decansäure.

Besonders bevorzugt liegen in der erfindungsgemäßen Mischung Monocarbonsäuren vor, wenn diese zur Reinigung von harten Oberflächen verwendet wird.

Dicarbonsäuren mit 2 bis 16 C-Atomen sind dem Fachmann ebenfalls bekannt.

In der erfindungsgemäßen Mischung liegt die Komponente (C) im Allgemeinen in einer Menge von 0,1 bis 20 Gew.-%, bevorzugt 2 bis 15 Gew.-%, besonders bevorzugt 3 bis 12 Gew.-%, jeweils bezogen auf die gesamte Mischung vor.

Wird die erfindungsgemäße Mischung beispielsweise für die Reinigung von Metall eingesetzt, liegt die Komponente (C) im Allgemeinen in einer Menge von 1 bis 10 Gew.-%, bevorzugt 3 bis 7 Gew.-%, jeweils bezogen auf die gesamte Mischung vor.

Wird die erfindungsgemäße Mischung beispielsweise für die Herstellung von Fasern eingesetzt, liegt die Komponente (C) im Allgemeinen in einer Menge von 0,1 bis 20 Gew.-%, bevorzugt 0,5 bis 15 Gew.-%, jeweils bezogen auf die gesamte Mischung vor.

In einer bevorzugten Ausführungsform der vorliegenden Erfindung ist die erfindungsgemäße Mischung eine wässrige Formulierung. Daher betrifft die vorliegende Erfindung bevorzugt die erfindungsgemäße Mischung, wobei es eine wässrige Mischung ist. Daher liegt in einer bevorzugten Ausführungsform in der erfindungsgemäßen Mischung neben den genannten Komponenten (A), (B) und/oder (C) Wasser, bevorzugt entmineralisiertes und/oder destilliertes Wasser, vor. Die Mengen der Komponenten (A), (B) und/oder (C), Wasser und gegebenenfalls vorliegenden weiteren Komponenten ergänzen sich dabei jeweils zu 100 Gew.-%. Erfindungsgemäß können zusätzlich zu dem bevorzugten Lösungsmittel Wasser auch organische, bevorzugt polare, Lösungsmittel vorliegen. Beispiele dafür sind Alkohole und Mischungen davon. Für den Fall, dass neben Wasser auch organische Lösungsmittel vorliegen, liegen diese in einer Menge von beispielsweise 0,1 bis 80 Gew.-% vor, jeweils bezogen auf die gesamte Mischung. In diesem Fall ergänzen sich die Mengen der Komponenten (A), (B) und/oder (C), Wasser, organischem Lösungsmittel und gegebenenfalls vorliegenden weiteren Komponenten jeweils zu 100 Gew.-%.

Die erfindungsgemäße Mischung kann neben den Komponenten (A) und (B) oder (A) und (C) oder (A), (B) und (C) gegebenenfalls weitere Komponenten ausgewählt aus der Gruppe bestehend aus anorganischen oder organischen Basen, anorganischen Säuren, Silikonölen, Wachsen, Imidazoliumsalzen und Mischungen davon enthalten.

Beispiele für erfindungsgemäß einsetzbare anorganische Basen sind Kaliumhydroxid und/oder Natriumhydroxid. Diese liegen beispielsweise in einer Menge von 1 bis 5 Gew.-%, bezogen auf die gesamte Mischung vor.

Beispiele für erfindungsgemäß einsetzbare organische Basen sind Amine. Diese liegen beispielsweise in einer Menge von 1 bis 5 Gew.-%, bezogen auf die gesamte Mischung vor.

Ein Beispiel für eine erfindungsgemäß einsetzbare anorganische Säure ist Borsäure. Diese liegt beispielsweise in einer Menge von 1 bis 5 Gew.-%, bezogen auf die gesamte Mischung vor.

Beispiele für erfindungsgemäß einsetzbare Silikonöle sind solche mit einer Viskosität von 500 bis 50000 mm²/s bei 25 °C. Diese liegen beispielsweise in einer Menge von 5 bis 80 Gew.-%, bezogen auf die gesamte Mischung vor.

Beispiele für erfindungsgemäß einsetzbare Wachse sind solche mit einem Schmelzpunkt von größer 40 °C. Diese liegen beispielsweise in einer Menge von 10 bis 80 Gew.-%, bezogen auf die gesamte Mischung vor.

Gegebenenfalls vorliegende Alkylimidazoliumsalze liegen beispielsweise in einer Menge von 0,4 bis 12 Gew.-%, bezogen auf die gesamte Mischung vor.

Ganz besonders bevorzugte, erfindungsgemäße Mischungen sind die Folgenden:
Mischung zur Verwendung als Allzweckreiniger:
   1. 3,2 Gew.-% 2-Propylheptylamin, alkoxyliert mit 7 Einheiten Ethylenoxid (Komponente (A)),
   2. 2 Gew.-% C12/C14 Alkyldimethylhydroxyammoniumchlorid (49 gew.-%ige Lösung in Wasser) (Komponente (B)) und
   3. 94,8 Gew.-% Wasser
Mischung zur Verwendung zur Reinigung von harten Oberflächen:
   1. 5 Gew.-% 2-Propylheptylamin, alkoxyliert mit 7 Einheiten Ethylenoxid (Komponente (A)),
   2. 5 Gew.-% Ethylhexansäure (Komponente (C)) und
   3. 90 Gew.-% Wasser
Mischung zur Verwendung zur Reinigung von Metalloberflächen:
   1. 2 Gew.-% Borsäure,
   2. 2 Gew.-% 50%ige KOH,
   3. 15 Gew.-% Mazox® LDA (Lauraminoxid, 30%ig in Wasser) (Komponente (B)),
   4. 2 Gew.-% Lutensol® ON 30 (Komponente (B))
   5. 1 Gew.-% 2-Propylheptylamin, alkoxyliert mit 7 Einheiten Ethylenoxid (Komponente (A)) und
   6. 78 Gew.-% Wasser.
Mischung zur Herstellung von Fasern:
   1. 5 bis 80 Gew.-% Siliconöl mit einer Viskosität von 500 bis 50000 mm²/s bei 25 °C,
   2. 10 bis 80 Gew.-% Wachs mit einem Schmelzpunkt größer 40 °C,
   3. 1 bis 10 Gew.-% Fettsäuren mit 12 bis 18 C-Atomen (Komponente (C)),
   4. 0,4 bis 12 Gew.-% Alkylimidazoliumsalz
   5. 1 bis 10 Gew.-% 2-Propylheptylamin, alkoxyliert mit 7 Einheiten Ethylenoxid (Komponente (A)) und
   6. Rest Wasser.

Die vorliegende Erfindung betrifft auch ein Verfahren zur Herstellung der genannten erfindungsgemäßen Mischungen durch Zusammengeben der einzelnen Komponenten in den jeweiligen Mengen. Vorrichtungen für dieses erfindungsgemäße Verfahren sind dem Fachmann an sich bekannt. Das erfindungsgemäße Verfahren kann bei Raumtemperatur oder erhöhter Temperatur durchgeführt werden.

Die vorliegende Erfindung betrifft auch die Verwendung der erfindungsgemäßen Mischung in Reinigungsmitteln, als Entroster, als Emulgator, bei der Herstellung von Fasern, zur Lederbehandlung, in Drucktinten, in Formulierungen für die Bauchemie oder in Formulierungen für die Flotation. Bezüglich dieser Verwendungen gilt das bezüglich der Verwendung der Verbindungen der allgemeinen Formel (A) und (AQ) Gesagte.

Die vorliegende Erfindung wird durch die folgenden Beispiele näher beschrieben.

### Beispiele:

### Beispiel 1 (Vergleichsbeispiel):

Es wird eine aus dem Stand der Technik bekannte Formulierung zum Autowaschen verwendet, die die folgende Zusammensetzung aufweist:
10 Gew.% Benzolsulfonsäure, C10-13-Alkylderivat, Natrium Salz in Wasser (50%)
20 Gew.-% Oleylaminethoxylat mit 12 EO,
12,5 Gew.-% Lauryl/Mistryl-Trimethylammonium Metosulfat in Wasser (30%ig) und
57,5 Gew.-% VE-Wasser.

### Beispiel 2 (erfindungsgemäß):

In der Formulierung gemäß Beispiel 1 wird Oleylaminethoxylat mit 12 EO durch eine äquivalente Menge 2-Propylheptylamin-(EO)₁₀ ersetzt.

### Ergebnisse:

Bei der Herstellung der Formulierungen kann beobachtet werden, dass sich das erfindungsgemäße 2-Propylheptylamin-Ethoxylat bedeutend besser in die Formulierung einarbeiten lässt. Oleylaminethoxylat mit 12 EO braucht länger, bis es sich in der Formulierung aufgelöst hat.

Des Weiteren wird die Reinigungsleistung der Formulierungen gemäß Beispiel 1 und Beispiel 2 gemäß Sheen (Mehrspurwischgerät) ermittelt. Die Reinigungsleistung ist bei beiden Formulierungen gleich, wobei die Formulierung gemäß Beispiel 2 mehr schäumt, aber nach dem Abspülen der Testplatten beide gleich zu bewerten sind.

Zusammenfassend kann gesagt werden, dass die erfindungsgemäße Formulierung gemäß Beispiel 2 eine mindestens gleich gute Reinigungsleistung zeigt wie die aus dem Stand der Technik bekannte Formulierung gemäß Beispiel 1. Die erfindungsgemäße Formulierung zeigt des Weiteren eine bessere Formulierbarkeit, ohne an Reinigungsleistung zu verlieren.

## Patentansprüche

1. Verwendung eines Alkoxylates der allgemeinen Formel (A) 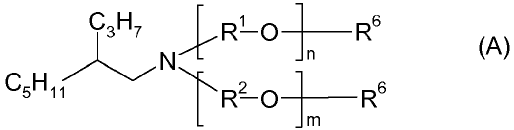 oder eines quarternisierten Alkoxylates der allgemeinen Formel (AQ) 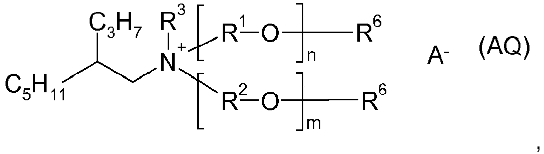 wobei
R¹, R² unabhängig voneinander ausgewählt sind aus der Gruppe bestehend aus Ethylen, Propylen, Butylen, Pentylen, Phenyl-ethylen, Cyclohexylen, Decylen und Mischungen davon,
R³ H, -OH, -OR⁴, -[R⁵-O]ₚ-R⁶, C₁-C₆-Alkyl oder ein Sauerstoffanion bedeutet,
R⁴ C₁-C₆-Alkyl, C₂-C₆-Alkenyl oder C₂-C₆-Alkinyl bedeutet,
R⁵ unabhängig voneinander ausgewählt ist aus der Gruppe bestehend aus Ethylen, Propylen, Butylen und Mischungen davon,
R⁶ unabhängig voneinander -H, C₁-C₆-Alkyl, C₂-C₆-Alkenyl, C₂-C₆-Alkinyl, -SO₃R^{a}, -P(O)OR^{b}OR^{c}, -CH₂CO₂R^{d} oder-C(O)R^{e} bedeutet,
R^{a}, R^{d} unabhängig voneinander H, organisches oder anorganisches Kation bedeuten,
R^{b}, R^{c} unabhängig voneinander H, organisches oder anorganisches Kation, C₁-C₆-Alkyl, C₂-C₆-Alkenyl oder C₂-C₆-Alkinyl bedeuten,
R^{e} C₁-C₂₂-Alkyl, C₂-C₂₂-Alkenyl, C₂-C₂₂-Alkinyl, C₅-C₂₂-Aryl, C₆-C₂₂-Alkylaryl bedeuten,
m, n, p unabhängig voneinander ganze Zahl von 1 bis 30 bedeuten und
A⁻ ein Anion ist, wobei für den Fall, dass R³ ein Sauerstoffatom ist, A nicht vorhanden ist,
in Reinigungsmitteln, als Entroster, als Emulgator, bei der Herstellung von Fasern, zur Lederbehandlung, in Drucktinten, in Formulierungen für die Bauchemie oder in Formulierungen für die Flotation.

2. Verwendung nach Anspruch 1, **dadurch gekennzeichnet, dass** R¹, R² und R⁵ unabhängig voneinander Ethylen, Ethylen und Propylen, Ethylen und Butylen oder Ethylen, Propylen und Butylen sind.

3. Verwendung nach Anspruch 1 oder 2, **dadurch gekennzeichnet, dass** in dem Alkoxylat der allgemeinen Formel (AQ) A⁻ ausgewählt ist aus der Gruppe bestehend aus Halogenid, Phosphat, Sulfat, Carboxylat oder eine Mischung davon.

4. Verwendung nach einem der Ansprüche 1 bis 3, **dadurch gekennzeichnet, dass** R³ H ist.

5. Verwendung nach einem der Ansprüche 1 bis 4, **dadurch gekennzeichnet dass** bei dem Alkoxylat der allgemeinen Formel (A) die Summe aus n und m 2 bis 40 ist.

6. Verwendung nach einem der Ansprüche 1 bis 4, **dadurch gekennzeichnet, dass** bei dem Alkoxylat der allgemeinen Formel (AQ) die Summe aus n, m und p 3 bis 80 ist.

7. Pestizid-freie Mischung enthaltend mindestens die Komponenten:
(A) mindestens ein Alkoxylat der allgemeinen Formel (A) und/oder (AQ) wie in einem der Ansprüche 1 bis 6 definiert als Komponente (A), und
(B) mindestens eine oberflächenaktive Substanz als Komponente (B) und/oder
(C) mindestens eine organische Carbonsäure als Komponente (C).

8. Mischung nach Anspruch 7, **dadurch gekennzeichnet, dass** als Komponente (B) mindestens ein anionisches Tensid, mindestens ein kationisches Tensid, mindestens ein nichtionisches Tensid und/oder mindestens ein amphoteres Tensid vorliegt.

9. Mischung nach Anspruch 7 oder 8, **dadurch gekennzeichnet, dass** die mindestens eine organische Carbonsäure ausgewählt ist aus der Gruppe bestehend aus Fettsäuren mit 12 bis 18 C-Atomen, Monocarbonsäuren mit 1 bis 10 C-Atomen, Dicarbonsäuren mit 2 bis 16 C-Atomen und Mischungen davon.

10. Mischung nach einem der Ansprüche 7 bis 9, **dadurch gekennzeichnet, dass** weitere Komponenten ausgewählt aus der Gruppe bestehend aus organischen oder anorganischen Basen, anorganischen Säuren, Silikonölen, Wachsen, Imidazoliumsalzen und Mischungen davon, vorliegen.

11. Mischung nach einem der Ansprüche 7 bis 10, **dadurch gekennzeichnet, dass** es eine wässrige Mischung ist.

12. Verwendung der Mischung nach einem der Ansprüche 7 bis 11 in Reinigungsmitteln, als Emulgator, bei der Herstellung von Fasern, zur Lederbehandlung, in Drucktinten, in Formulierungen für die Bauchemie oder in Formulierungen für die Flotation.

## Claims

1. The use of an alkoxylate of the general formula (A) 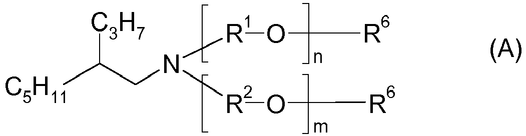 or of a quaternized alkoxylate of the general formula (AQ) 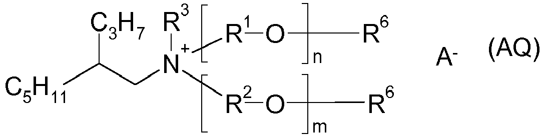 , where
R¹, R² independently of one another, are selected from the group consisting of ethylene, propylene, butylene, pentylene, phenylethylene, cyclohexylene, decylene and mixtures thereof,
R³ is H, -OH, -OR⁴, -[R⁵-O]ₚ-R⁶, C₁-C₆-alkyl or an oxygen anion,
R⁴ is C₁-C₆-alkyl, C₂-C₆-alkenyl or C₂-C₆-alkynyl,
R⁵ independently of one another, is selected from the group consisting of ethylene, propylene, butylene and mixtures thereof,
R⁶ independently of one another, is -H, C₁-C₆-alkyl, C₂-C₆-alkenyl, C₂-C₆-alkynyl,-SO₃R^{a}, -P(O)OR^{b}OR^{c}, -CH₂CO₂R^{d} or -C(O)R^{e},
R^{a}, R^{d} independently of one another, are H, organic or inorganic cation,
R^{b}, R^{c} independently of one another, are H, organic or inorganic cation, C₁-C₆-alkyl, C₂-C₆-alkenyl or C₂-C₆-alkynyl,
R^{e} is C₁-C₂₂-alkyl, C₂-C₂₂-alkenyl, C₂-C₂₂-alkynyl, C₅-C₂₂-aryl, C₆-C₂₂-alkylaryl,
m, n, p independently of one another, are integers from 1 to 30 and
A⁻ is an anion, where, in the case that R³ is an oxygen atom, A is not present,
in cleaning compositions, as rust remover, as emulsifier, in the manufacture of fibers, for leather treatment, in printing inks, in formulations for construction chemistry or in formulations for flotation.

2. The use according to claim 1, wherein R¹, R² and R⁵, independently of one another, are ethylene, ethylene and propylene, ethylene and butylene or ethylene, propylene and butylene.

3. The use according to claim 1 or 2, wherein, in the alkoxylate of the general formula (AQ), A⁻ is selected from the group consisting of halide, phosphate, sulfate, carboxylate or a mixture thereof.

4. The use according to any one of claims 1 to 3, wherein R³ is H.

5. The use according to any one of claims 1 to 4, wherein, in the alkoxylate of the general formula (A), the sum of n and m is 2 to 40.

6. The use according to any one of claims 1 to 4, wherein, in the alkoxylate of the general formula (AQ), the sum of n, m and p is 3 to 80.

7. A pesticide-free mixture comprising at least the components:
(A) at least one alkoxylate of the general formula (A) and/or (AQ) as defined in any one of claims 1 to 6 as component (A), and
(B) at least one surface-active substance as component (B) and/or
(C) at least one organic carboxylic acid as component (C).

8. The mixture according to claim 7, wherein at least one anionic surfactant, at least one cationic surfactant, at least one nonionic surfactant and/or at least one amphoteric surfactant is present as component (B).

9. The mixture according to claim 7 or 8, wherein the at least one organic carboxylic acid is selected from the group consisting of fatty acids having 12 to 18 carbon atoms, monocarboxylic acids having 1 to 10 carbon atoms, dicarboxylic acids having 2 to 16 carbon atoms and mixtures thereof.

10. The mixture according to any one of claims 7 to 9, wherein further components selected from the group consisting of organic or inorganic bases, inorganic acids, silicone oils, waxes, imidazolium salts and mixtures thereof are present.

11. The mixture according to any one of claims 7 to 10, which is an aqueous mixture.

12. The use of the mixture according to any one of claims 7 to 11 in cleaning compositions, as emulsifier, in the manufacture of fibers, for leather treatment, in printing inks, in formulations for construction chemistry or in formulations for flotation.

## Revendications

1. Utilisation d'un alcoxylate de formule générale (A) : 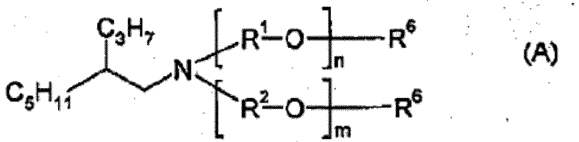 ou d'un alcoxylate quaternisé de formule générale (AQ) : 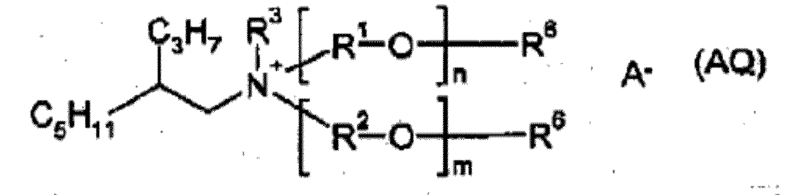 où
R¹, R² sont choisis indépendamment l'un de l'autre dans le groupe constitué d'éthylène, propylène, butylène, pentylène, phényléthylène, cyclohexylène, décylène et leurs mélanges,
R³ représente H, -OH, -OR⁴, -[R⁵-O]ₚ-R⁶, C₁₋₆-alkyle ou un anion oxygène,
R⁴ représente C₁₋₆-alkyle, C₂₋₆-alcényle ou C₂₋₆-alcynyle,
R⁵ est choisi indépendamment dans le groupe constitué d'éthylène, propylène, butylène et leurs mélanges,
R⁶ représente indépendamment -H, C₁₋₆-alkyle, C₂₋₆-alcényle, C₂₋₆-alcynyle, -SO₃R^{a}, - P(O)OR^{b}R^{c}, -CH₂CO₂R^{d} ou -C(O)R^{e},
R^{a}, R^{d} représentent indépendamment H, un cation organique ou minéral,
R^{b}, R^{c} représentent indépendamment H, un cation organique ou minéral, C₁₋₆-alkyle, C₂₋₆-alcényle ou C₂₋₆-alcynyle,
R^{e} représente C₁₋₂₂-alkyle, C₂₋₂₂-alcényle, C₂₋₂₂-alcynyle, C₅₋₂₂-aryle, C₈₋₂₂-arylalkyle,
m, n, p sont indépendamment des entiers entre 1 et 30, et
A⁻ est un anion, absent dans le cas où R³ serait un oxygène,
dans des produits nettoyants, comme agent antirouille, comme émulsifiant, dans la fabrication de fibres, pour le traitement du cuir, dans des encres d'imprimerie, dans des formulations pour la chimie de la construction ou dans des formulations pour la flottation.

2. Utilisation selon la revendication 1, **caractérisée en ce que** R¹, R² et R⁵ sont indépendamment les uns des autres éthylène, éthylène et propylène, éthylène et butylène ou éthylène, propylène et butylène.

3. Utilisation selon la revendication 1 ou 2, **caractérisée en ce que**, dans l'alcoxylate de formule générale (AQ), A⁻ est choisi dans le groupe constitué d'un halogénure, d'un phosphate, d'un sulfate, d'un carboxylate ou de leurs mélanges.

4. Utilisation selon l'une des revendications 1 à 3, **caractérisée en ce que** R³ = H.

5. Utilisation selon l'une des revendications 1 à 4, **caractérisée en ce que**, pour l'alcoxylate de formule générale (A), la somme de n et m se situe entre 2 et 40.

6. Utilisation selon l'une des revendications 1 à 4, **caractérisée en ce que**, pour l'alcoxylate de formule générale (AQ), la somme de n, m et p se situe entre 3 et 80.

7. Mélange sans pesticides contenant au moins les composants suivants :
(A) au moins un alcoxylate de formule générale (A) et/ou (AQ) comme dans l'une des revendications 1 à 6, défini comme composant (A), et
(B) au moins une substance active en surface comme composant (B), et/ou
(C) au moins un acide carboxylique organique comme composant (C).

8. Mélange selon la revendication 7, **caractérisé par** la présence comme composé (B) d'au moins un tensioactif anionique, au moins un tensioactif cationique, au moins un tensioactif non-ionique et/ou au moins un tensioactif amphotère.

9. Mélange selon la revendication 7 ou 8, **caractérisé en ce que** l'au moins un acide carboxylique organique est choisi dans le groupe constitué d'acides gras avec de 12 à 18 atomes de carbone, d'acides monocarboxyliques avec de 1 à 10 atomes de carbone, d'acides dicarboxyliques avec de 2 à 16 atomes de carbone et de leurs mélanges.

10. Mélange selon l'une des revendications 7 à 9, **caractérisé par** la présence d'autres composants choisis dans le groupe constitué de bases organiques ou minérales, d'acides minéraux, d'huiles de silicone, de cires, de sels d'imidazolium et de leurs mélanges.

11. Mélange selon l'une des revendications 7 à 10, **caractérisé en ce qu'**il est un mélange aqueux.

12. Utilisation d'un mélange selon l'une des revendications 7 à 11 dans la fabrication de fibres, pour le traitement du cuir, dans des encres d'imprimerie, dans des formulations pour la chimie de la construction ou dans des formulations pour la flottation.
